Europäisches Patentamt

European Patent Office

Office européen des brevets

(19)

(11) Publication number: **0 349 470**
**A2**

# EUROPEAN PATENT APPLICATION

(12)

(21) Application number: **89600007.2**

(22) Date of filing: **29.03.89**

(51) Int. Cl.⁵: **G 08 G 1/09**

(30) Priority: **30.03.88 GR 88010205**

(43) Date of publication of application:
**03.01.90 Bulletin 90/01**

(84) Designated Contracting States:
**AT BE CH DE ES FR GB GR IT LI NL SE**

(71) Applicant: **Anagnostopoulos, Panagiotis A.**
**Velissariou Str. 1**
**GR-15562 Cholargos Athens (GR)**

(72) Inventor: **Anagnostopoulos, Panagiotis A.**
**Velissariou Str. 1**
**GR-15562 Cholargos Athens (GR)**

The title of the invention has been amended (Guidelines for Examination in the EPO, A-III, 7.3).

(54) **Remote guidance- and information system for drivers and pedestrians in road traffic areas.**

(57) Method of tele-information (tele-driving) for any driving of a vehicle or pedestrian to a determined destination characterized by transmitters of regulable range positioned on each crossing or in between the roads and each of them transmits a codified signal by means of an electromagnetic or ultraviolet radiation signal which is the identification of the transmitter and at the same time, the identification of the geographic spot whereon it has been installed and from an antenna-receiver-computer, positioned on a vehicle or portable, characterized by that it receives the various codified signals from the transmitter which is able to transmit also from a direction wherefrom the vehicle passes, which transmitter processes the signals and correlates them to the programmed series of codes which determines the right course to be followed by the vehicle in order to arrive to its destination and indicates to its driver the distance from its destination and through sound (voice or signal) or optical signals in which crosses he is to turn right or left, in which point of the course he failed and when he is expected to reach the target.

Method of recognising and reading of the road signs and of the road lights through sound (voice or signal) or optical indications which inform the driver and come from a receiver-computer positioned into the vehicle which receives codified signals emanating from transmitters positioned by the road signs and transmit only towards the direction the above signs face.

EP 0 349 470 A2

**Description**

## PANDRIVE - A REMOTE SENSOR GUIDANCE AND INFORMATION SYSTEM FOR DRIVERS OF LAND VEHICLES AND INDIVIDUALS IN FOOT IN VEHICLE MOVEMENT AREAS

The present invention is a comprehensive method of providing the driver of a vehicle and/or an individual on foot with optimised guidance/routing instructions given departure point and destination supplemented by en route audio and/or visual warnings and instructions derived from sensor readings of traffic lights, road signs as well as detected obstacles and/or hazardous road conditions. The objectives are as follows:

1. The guidance of a vehicle or personnel to a predetermined destination using outputs from sensors mounted on the vehicle or carried by the personnel processed in a receiver-computer unit mounted inside the vehicle or carried by the personnel to provide visual and audio guidance signals.

2. The recognition of highway signs and reading of traffic lights by sensors and the provision of audio and visual warnings for the vehicle driver and/or other personnel by means of a receiver computer unit mounted in the vehicle.

3. The provision of early warning for the driver of a vehicle in the event of possible collision and or the stopping and/or dangerous movement of vehicles on the road ahead of him with audio and/or visual alarms and indicators from a receiver-processor unit mounted inside the vehicle and activated by external sensors.

4. To provide the driver of a vehicle with early warning of ice or accumulated water on the road surface, fog or restricted visibility or high wind forces by means of audio and visual alarms and indicators produced by a receiver-processor unit mounted in the vehicle, activated by external sensors.

5. To provide a vehicle with an encoded message and identification signal emission system the signals from which can be received and decoded by receiver-processor units installed in other vehicles and or at selected locations.

6. To transmit encoded signals with data or commercial content with short range emitters and decode them in the vehicle reveiver-processor units referred to above.

7. To transmit encoded messages with portable emitters which can be received, decoded and read using the vehicle receiver-computer processor units referred to above. The portable emitters also intended for use in the home for emergency calls in the event of robbery, sudden illness.

8. To regulate traffic by combining Objects 1, 5 and 6) with a central computer to identify vehicle signals, count them and record their positions in a given sector, (Object 5), process the data and relay to each vehicle, (Object 6), optimised guidance (routing) instructions taking them to their destinations through streets with the lowest traffic density. (Object 1)

9. To monitor the movements of a vehicle and record distance travelled, the time, duration and location of each stop, and its average speed.

10. To provide guidance for pedestrians with a portable device enabling them to select and locate their desired destinations in crowded areas such as a city center or large exhibition center.

In the present state of the art, naval and air forces employ systems achieving Object 1 to determine with precision the position of a marine vehicle or aircraft. Other systems employing external sensors are employed in automatic pilot and ground controlled approach and landing installations. It is, however, extremely difficult to sue these systems for millions of road vehicles simultaneously irrespective of the excessively high cost.

Another state of the art system assisting the driver of a long vehicle in locating his destination is a map-type display with an illuminated blip indicating the vehicle's position.

In such systems, it is presupposed that the user has knowledge of his intended route, destination location and the precise position of his vehicle on the map, and thus can follow the blip trace to approach his destination. In addition to knowledge of obstacles along the route, one way streets and the like, this demands continuous scrutiny of the map display which is difficult task while driving and in extreme conditions, impossible.

Another state of the art route optimisation system tested in Japan uses a computer, data storage and display unit installed in the vehicle and external sensors which pick up emission from emitters installed at selected positions within the area served by the system. Data input is restricted to initial vehicle and destination positions on the basis of which the computer optimises the route using pre-stored data. The route is displayed and as the vehicle proceeds its progress is monitored by the computer's attention from the road ahead.

The Present Invention allows the driver to enter his destination code number, and be guided safely following the computer display guidance instructions, even if he was unaware of the vehicle's initial position.

While en route, the driver receives numerous signals containing traffic hazard information, highway sign indications, as well as informatory texts from varied sources, including museums, archaeological sites and commercial outlets. He is guided to his destination with precision regardless of his initial distance from it.

The present invention thus eliminates driving problems associated with state of the art systems. the methods of its utilisation are:

## METHOD 1

This method, the Road Information System, provides every driver with highly accurate information pertaining to any country and/or city.

The system is composed of adjustable range emitters at every road junction and/or at intervals between them. Each emitter transmits an encoded signal unique to itself and its location, in this way every road junction and possible route in a country or region acquire a characteristic number which is transmitted continuously at all times. In this way an overall electronic charting of a country's highway system can be achieved can be achieved. Similarly, emitters can be installed in other locations to mark government buildings, hotels, museums, archaeological sites, etc.

The emitters draw power from the public supply networks, battery installations, photo-voltaic solar cells and/or a combination of systems to ensure uninterrupted power supply.

The vehicle installation, consisting of an antenna, receiver, computer and display unit is supplied with power from either the vehicle's electrical system or an independent battery.

Incoming signals are decoded by the receiver and fed to the computer for processing. Emissions are unidirectional and transmitted towards traffic moving in one direction on a particular route. Similarly, antennae installed on the vehicles are directional so that interference and/or ambiguity due to overlapping transmissions is precluded.

The computer is programmed to optimise a route between given points of departure and destination. Programming can be accomplished by specialised traffic engineers and/or experienced individuals in the traffic police or transportation industry.

The vehicle starts from a point of departure and arrives at a destination each designated by the emitter nearest to it.

The sequence of roads is stored as data in the computer as a sequence of emitter code numbers.

After decoding, every signal is displayed for the driver in the form of an instruction such as 'turn Right', 'Turn Left', 'No Turn' or 'Wrong Route'. The driver is made aware of an approaching turn by an audio signal or a voice-simulated instruction which is initiated as the vehicle passes the appropriate marker emitters. When encoded signals are received and no turn is necessary, an arrow, indicating 'No Turn' may be displayed on the screen.

If the vehicle deviates from the predetermined optimised route, either as a result of error or intentional action on the driver's part, and the computer input contains an emitter code which does not match the stored sequence, the driver immediately receives an audio/visual warning signal.

In such causes, the computer automatically re-optimises the route from the vehicle's new position and re-initiates display of guidance instructions. Similarly, if the driver intentionally deviates from his route to reach an alternative or intermediate destination, (a hotel, pharmacy, or museum, for example,), entry of the appropriate location code number will result in optimisation of the route to his new destination and display of the necessary guidance instructions.

In the event of a driver having no previous knowledge of the route blindly following the guidance instructions, simple commands such as 'Straight On', 'Turn Left', 'Turn Right', etc., will be inadequate as, for example in a case where a 'Turn Left' instruction is given to a driver in the right hand lane of a multi-lane highway too late for him to move into the correct position to make the turn.

To avoid these situations, in addition to direct guidance commands, the programme displays instructions on those to follow. For example:
STRAIGHT - LEFT TURN - RIGHT TURN
STRAIGHT - RIGHT TURN - LEFT TURN
TURN RIGHT - STRAIGHT ON - LEFT TURN
('Turn Right' would be a direct guidance command while 'Right Turn' would anticipate a subsequent command.)

Various types of information related to tourist, commercial or other activities can be stored in the system as data relevant to various locations are displayed when the corresponding emitter signal is received. The language in which the data is presented can be selected also. Information can also be provided in respect of available hotels, hospitals, emergency services and numerous other facilities quite apart from regulations and formalities applying to the area in which the vehicle is operating.

The computer-receiver unit is programmed to respond to an approaching location number and provide information on pre selected subjects, (ie. restaurants or museums, etc.), so long as the approaching number is not simply a routing marker.

The Road Information System, (RIS), contributes to more comfortable and safer driving. Even drivers with previous knowledge of a route can miss a turn and cause a serious accident while impatiently attempting to return to their original route.

A considerable number of accidents associated with a driver being distracted from road hazards while attempting to find his way in conditions with restricted visibility, (snow, rain, fog,), can be avoided with the RIS.

Furthermore, drivers outside their own countries encounter peculiarities of local traffic, language barriers and distracting, impressive sights, here again the RIS contributes to safer driving.

Method 1 is combined and integrated into Methods 2,3,4,5,6,7,8 and 9.

An example of the application of Method 1 for driving a vehicle to a required or pre-determined destination follows.

Imagine a foreign or native visitor to Paris driving his own or a rented car who inserts the diskette or other data storage device appropriate to Paris into the computer, loads the data and programme and calls up as his first need, a hotel listing. The possibilities are:

    a. He knows the hotel and obtains the nearest marker emitter number from the hotels list which he keys into the computer to obtain optimised routing instructions.

    b. Not knowing which hotel to go to, he asks the computer to guide him to the nearest hotel or possibly to a hotel in a particular section of the city. The marker emitter number then becomes his destination code number.

c. Not knowing of any hotel, he aimlessly drives until he comes across to one.

In cases a. and b. the computer defines route marker code numbers by which the vehicle has to pass in order to follow the optimised route to its destination. If this routing involves changes in direction the computer, on receiving the relevant code numbers, displays the appropriate "Turn Left" or "Turn Right" instruction. If a marker code number not included in the routing sequence is detected a voice simulator "WRONG ROUTE" warning is issued.

With no action on the driver's part, the computer automatically selects a new optimal route from the last received marker emitter to the initial destination.

Deliberate deviations from the routing may be made repeatedly, and the computer will always respond by redefining the optimised route to the initial destination.

If the driver has no reservation and the hotel has no vacancy, then an encoded message transmitted by the hotel's emitter is picked up by the vehicle receiver, decoded and displayed as, for example, "HOTEL HAS NO VACANT ACCOMMODATION' while at the same time the code number of a hotel which does have a vacancy is displayed, the driver can then designate this number as his destination and on reaching the hotel, obtain from the computer guidance to the nearest parking facility.

The visitor is thus able to solve his first problems in the easiest possible way.

If the visitor subsequently wishes to indulge in sightseeing he has only to enter the code numbers of the places he wishes to see. The computer would initially display the optimised route to the nearest place, and from there, routes to the others, minimising the distances to be covered. Again, without specific instructions, the driver can ask the computer for guidance to the local museums. The computer will then display the best routes to all of the museums, minimising the distances and/or probable transit time, and on arrival at each, the indication "END OF ROUTE", (or "NOW AT DESTINATION" will be displayed for the driver.

If the driver wishes to proceed to, say, Dusseldorf, he obtains guidance for the journey there by entering an intercity routing or highway code number and on arrival, he would load the Dusseldorf information data from the appropriate diskette. He can then reach any selected destination without unnecessary delay.

METHOD 2

This is a method of providing the driver with readings of road signs and traffic light indications together with appropriate warnings by means of a computer-receiver unit installed in his vehicle. The system anticipates fixed or adjustable range emitters installed at important road sign and traffic light locations.

It is also possible for the content and location of road signs and traffic light positions to be stored in the vehicle's computer memory and correlated with the two emitters defining that section of the route. This data is subsequently used to supplement guidance instructions if the road between the emitters forms part of a subsequent routing.

The emitters transmit a continuous signal characterising the significance and content of the road signs on which they are mounted. Emission is unidirectional so that the signal is received only by vehicles approaching the sign from the appropriate direction. The decoded signal is presented to the driver via a voice simulator and/or written display warning, such as "STOP - CAUTION - OBLIGATORY LEFT TURN - RED LIGHT - GREEN LIGHT-AMBER - SCHOOL -,etc. Sign content can also be recalled from memory.

In the case of traffic lights, the balance of time, in characteristic signal, and the driver hears messages such as "GREEN TEN" meaning that a green traffic light will remain green for ten mor seconds, followed by the sequential "GREEN EIGHT - GREEN SIX - GREEN FOUR - GREEN TWO - AMBER - ....." this allows a driver to know precisely when the green light will change. This is significant in that most traffic light violations take place during the first few seconds after the red light appears and rarely later. This results from failure to estimate correctly time and stopping distance in a fast moving vehicle and the temptation to 'catch' the changing light. Sometimes the brakes are applied too late and too abruptly with consequent loss of control, and sometimes the driver accellerates past the red light risking a collision.

With the spoken warning and count down for the time remaining before a green light changes, the driver can react correctly without hesitation and a critical situation is no longer a matter of chance or poor estimation. When the traffic lights are inoperative, either intentionally or accidentally, the emitters continue transmitting and issue encoded instructions regarding precedence and right of way appropriate to the location, such as ....VEHICLES COMING FROM YOUR RIGHT HAVE RIGHT OF WAY...

An example of the application of this method of reading road signs and giving instructions to the driver follows:

A departing vehicle is routed through a 'downtown' area. All the streets have every necessary sign and traffic lights at intersections. We assume that at the first intersection there is a red traffic light indication of which the driver is unaware. However the emitter signal activates the vehicle receiver-computer unit and the driver, by means of the voice simulator, hears the warning "RED LIGHT" - STOP". When the light changes, he hears the instruction "GREEN LIGHT - MOVE ON....", then, possibly the warning "CAUTION - SCHOOL....". Throughout the trip he hears such instructions in time for him to react properly.

In the case of a double or triple traffic light with one light for "straight ahead" red and another for "right turn" green, the driver hears the warning "STRAIGHT RED - RIGHT GREEN", followed by "OBLIGATORY RIGHT TURN". Later he may hear "GREEN TWO", informing him that the green light will change in two seconds, so that he can assess his speed and position to stop and not pass a red light. In conditions of reduced visibility, invariably with clouded windshield it is unecessary for the driver to attempt to see the traffic lights as he can act on the RIS computer instructions alone.

## METHOD

This is a method for providing drivers with early warning of hazardous conditions ahead of him such as an obstacle or vehicles immobilised after an accident.

For this purpose, omnidirectional emitters of predetermined range are installed on every vehicle. Under normal conditions, these emitters, all of which transmit the same encoded , are inoperative. Impact shock and/or violent vehicle deceleration in an accident actuates an inertia switch and activates the emitter which commences transmission of a standard 'extreme hazard' warning message to approaching vehicles.

Manual activation of the hazard warning emitter by a driver is anticipated in the installation in cases where it is necessary for him to warn other vehicles of hazards such as fallen trees, debris, dangerously parked vehicles, etc., or when he himself is immobilised or obliged to leave his vehicle in a potentially hazardous location. This implies in fog, darkness, rain, snow and/or oily or ice-covered road surfaces, all of which are conductive to sequential collisions commonly referred to as 'pile-ups'.

Experience has shown that drivers involved in these incidents can not react in time and/or correctly, and only this type of early warning can minimise the possibility of such multiple accidents by allowing time for drivers coming from both directions to reduce speed. An example of the early warning method's application is as follows:

Vehicles moving along a highway in foggy conditions are being driven carefully. Visibility is adequate for the drivers to stop safely if the vehicle ahead reduces speed gradually, however when one driver, while attempting to overtake another vehicle, causes his own to strike the central parapet and become immobilised in the central lane, there is insufficient time and distance available to oncoming drivers in which to react on seeing the stationary vehicle. A multiple collision is averted as the impact of the vehicle striking the parapet activates its hazard warning emitter, so that drivers in the vicinity can take the simple precaution of reducing their speed.

If a vehicle should strike and kill an animal, or the driver should observe a potentially hazardous object abandoned on the road, he immediately activates his hazard warning emitter and moves his vehicle to a safe position nearby. Approaching drivers are duly warned and the object or carcass can be removed without risk.

## METHOD 4

Using this method, early warning is provided of (a). High wind forces, (b). Dangerous accumulation of water on the road surface, (c). Icy road surface, and (d) Reduced visibility due to fog.

The method is based on the following:

(a). Emitters installed at appropriate points on roads and highways where dangerously high wind forces are encountered. Anemometers are used to activate them when wind velocity exceeds a predetermined value. An encoded warning signal is transmitted to inform drivers in the area of dangerously high wind forces in specified areas, for example: "FORCE 8 CROSSWIND 5 KM AHEAD" might be read by a driver on a sheltered mountain pass road.

(b). Emitters installed at locations where water accumulation on the roadway creates a driving hazard. Activation is achieved with a water level sensor and the characteristic warning message would be "WATER -CAUTION', followed by a distance figure.

(c). Emitters installed at locations where ice can form on the road surface activated by ice formation on the sensor. The warning "CAUTION - ICE" is displayed to all drivers in the area.

It is also possible to detect developing icy conditions by processing air temperature and relative humidity values and activate emission of an early warning before ice actually forms on the sensor. This information can also be fed to receiver-computer units in individual vehicles to include road conditions in the route optimisation process.

Transmission of the ice hazard warning is automatically cut off when temperature, wind velocity and humidity values permit.

(d). Emitters installed at locations where fog ocurrs. A photo-electric fog/smoke detector is used to activate each emitter and initiate transmission of a "FOG -CAUTION" warning to all vehicles in the area. The onset of foggy conditions can be predicted by monitoring and processing air temperature, humidity and wind velocity in a micro-processor unit installed with the fog detector, emitter and other sensors.

Road signs warning drivers of possible ice and/or foggy conditions are seldom taken seriously as they are easily discerned in good weather conditions and pass unnoticed in less favourable conditions. Entry into foggy areas is often sudden and unexpected. Voice simulator warning of fog or ice given only when such conditions exist and/or are highly probable is of proven effectiveness.

As an example of the early fog/ice/water warning method consider the case of a vehicle passing through a mountainous region with topography conducive to very strong cross winds at points along the highway. The anemometers at these points activate the appropriate emitter(s) and the approaching driver is alerted by an audio warning "STRONG CROSS WIND AHEAD" and an instruction/hazard position display both of which allow him to prepare himself, reduce speed and pass the dangerous section of roadway safely.

Similarly, if flooding, and particular flash flooding is frequent, the permanent sensors and emitters can be supplemented by others set up by the local highway police. Water level sensor/switches can activate the emitters so that appropriate warnings can be transmitted according to the depth and extent of the water accumulation. For example: "CAUTION - WATER" warns of water accumulations sufficient to dangerously reduce a vehicle's road holding capability or even allow aquaplaning. "CAUTION - FLOODING" informs the driver that there is up to say twenty centimeters of water covering the roadway and finally "ROAD IMPASSABLE -REROUTE" would be displayed according to vehicle characteristics and water accumulation depth and/or extent.

In the case of fog, again especially in mountainous areas where the sudden localised appearance of fog is frequent, permanent emitters with photometric activation can be supplemented by others set up pro tempore by highway police units.

METHOD 5

With this method identification of drivers/vehicles and communication between them is achieved using receiver-computer units installed at specific locations.

The method is based on the installation of an emitter installed on each vehicle transmitting an identification code number and/or other standardised encoded messages selected by the driver. These can be general and will be decoded and displayed for all drivers in the region or specific and addressed to one particular receiver using its identification code number.

Communication is constantly maintained between drivers with the further capability of message relay through fixed receiver-processing computer stations. This method allows the solution of the following problems:

(a). Drivers are made aware of unseen approaching vehicles at night or in fog, or in 'closed' turns, by means of their continuously operating identification units.

(b). Regardless of right of way priority, a driver approaching an intersection is aware of, and in contact with vehicle approaching from other directions.

(c). A driver and/or vehicle can be identified when passing toll stations and automatically charged. This prevents delays and traffic jams as the vehicle does not stop.

(d). The location of stolen and/or fugitive vehicles by the police is facilitated, especially if the identification emitter unit has protective sealing.

(e). Identity code numbers of other vehicles which the driver may communicate with frequently can be stored in his vehicle computer allowing message exchange while within emitter range.

(f). Ambulances, police vehicles and fire-fighting units have more time to make drivers aware of their routes and need to pass without hinderance.

(g). Common messages, such as "Don't overtake me. Oncoming vehicle." or, "Caution. I am turning to the left." or "Children on roadway." can be readily and rapidly exchanged using pre-encoded data.

Furthermore, direction indicator flashes can be readily detected by vehicle sensors and interpreted in the receiver-processor unit and the driver of a following vehicle, even in adverse conditions, is aware of them. In addition, an acoustic sensor can discriminate against background noise, distinguish the horn of an adjacent vehicle and activate the processor to sound an alarm inside the vehicle.

This method of communication and information interchange between drivers can dramatically reduce accidents in conditions of reduced visibility and/or restricted fields of vision. Driver behaviour patterns will become less hostile and more human.

An example of how this method of communication between drivers and between drivers and fixed station is illustrated by the case of a driver at a city road intersection. Sometimes he has priority, sometimes he must STOP and CROSS CAREFULLY. Thus, at every intersection the driver unaware whether other vehicles are approaching or not, hesitates. With continuously transmitting emitters indentifying his own and the other vehicles near him, he is provided with adequate anticipation of sightings.

Even while driving in daytime with good visibility it is often inconvenient to monitor other vehicles in a mirror which can absorb his attention, and not infrequently let him be taken unawares by approaching and/or overtaking vehicles. If the other drivers use their horns to warn him a startled, spontaneous reaction can be dangerous or even result in loss of control.

Employment of encoded indentification signals allows a driver to be made aware of other vehicles and can react correctly. In darkness, fog, or rain-restricted visibility, in early warning of approaching vehicles eliminates danger of head-on collision.

A system of sequential identity code number transmissions assures reception of the numbers of all vehicles in a crowded area. Stations at various central locations, checking indenty signals from approaching vehicles immediately detect those which have been stolen and/or involved in criminal or terrorist acts. The vehicle identification transmitter will be installed in such a way as to make removing it or making it inoperative extremely difficult. If the emission is shielded, non-reception of a signal by the monitoring station tag the vehicle for detention.

A driver can also program the vehicle computer to advise him if identification code number belonging to persons with whom he wishes to come into contact are received. The method also allows collection and processing of some statistical data.

Commands activated by signals from fire-fighting and police vehicles and/or ambulances, requiring the driver to pull off the roadway or change routing will reduce and degree of reluctance to free the way resulting from the remoteness of a sirene and/or inability to distinguish the direction from which the sound is coming. With this method the driver knows when the police or emergency service vehicle is behind him.

If a driver is negotiating a curve where oncoming vehicles can not be seen at any distance, he can inform the driver of a vehicle who desires to overtake him that there is a vehicle approaching from the opposite direction. Similarly drivers can be warned that a vehicle ahead of them will stop suddenly either by a manually activated signal from that vehicle as it stops or automatically activated by an inertia switch. (Operating independently of the impact/inertial switch installed for crash warning). The vehicle computer is programmed to assign priority to emergency calls firstly, then to traffic police direction. Orientation messages again have priority over general information and data.

## METHOD 6.

This is a method for the multiple transmission of messages,, information, commercial material and other data with short range emitters for detection, decoding and display by vehicle receiver-computer units.

Multiple transmission is achieved by installing units consisting of a database microcumputer and emitter system in appropriately selected locations. The data base content is encoded for transmission and messages picked up by vehicle receivers are displayed at times selected by the driver.

Information in the database could range from opening hours of a museum, the significance of specific monumemnts or stores selling particular items to police messages about roadworks and/or obstacles.

As an example of the use of this method is the case of a tourist driving close to the Acropolis. The data base installed there allows him to receive an appropriate historical summary after which he will receive corresponding information about the theater of Herodius Atticus. (Deferred if transmission of the Acropolis summary has not been completed). Moving further he can obtain information about the Temple of Jupiter ruins and details of special discounts for visitors staying at the hotels nearby for more than one week. This method can also be combined with applications of methods 1,2,3,4,5,6,7,8 and 9 to meet more complex requirements.

## METHOD 7

This method is applied to enable messages to be transmitted from non-system stations and/or pedestrians by means of a portable emitter encoder unit. Transmission, continuous or intermittent can only be activated manually. The types of message anticipated include information on hotels, parking spaces, restaurants, etc. Encoded communication between hotels, and so on. Decoding by vehicle units is as described above.

In providing communication between pedestrians and vehicles this method solves several problems, including:

(a) That of a pedestrian in immediate danger of being assulted and/or robbed and thus needing to transmit an SOS message.

(b) Of relaying a fire and/or medical emergency message without delays due to telephone lines being blocked or engaged. (c). For a pedestrian in locating and/or calling a taxi to a particular area.

(d). For a driver, arriving at a hotel with no vacant rooms. Using this method he can obtain directions to another hotel with vacancies without stopping. This also applies in the case of restaurants, museums, pharmacies, filling stations and various emergency centers.

(e). Of enabling the police to provide drivers with instructions in connection with deviations and re-routing of traffic. The portable unit would transmit a standard system "DEVIATION" message with a right or left turn instruction.

As an example of the application of this method consider a woman walking at night who becomes the victim of a violent attack. She has the possibility of instantaneously activating her portable emitter and alerting not only the police but also every vehicle driver within a hundred meters radius. Given that an individual feels more secure and stronger in his car, pursuit of the criminal is more determined.

## METHOD 8

This is a method of regulating traffic by a combination of methods 1,5,6 and 8 based on the use of a central computer to process signals received from moving vehicles and transmit guidance instructions to drivers in high density traffic, re-routing them to their destination by Method 1.

In this method, the traffic police receive identification signals from vehicles passing two specific points in a given traffic sector. If density rises to a level at which congestion is imminent, approaching drivers are given the order to re-route. This they can do by the 'Teleguide' method (Method 1). As an example consider the conditions where a large number of vehicles are converging on a central avenue. Traffic control officials, knowing that the avenue is nearly congested, employ emitters situated on its approaches, to instruct approaching drivers to select new routes using their Teleguides, and a traffic jam is avoided, and drivers enter new routings.

## METHOD 9

This is a method of keeping a daily record on vehicle movements, to monitor and obtain data on the total distance travelled, the location and duration of each stop, average speed etc.

This data can be recorded and retained in a special section of the computer's memory from the content of messages received during vehicles operation. The data can be recalled from the memory at any desired time.

An example of the application of this method is the monitoring of the dealers by a sales manager (where they went, the persons they met, how long they spent at each customer as well as when they stopped work etc.).

## METHOD 10

The method is based on a portable computing-receiveing unit that works in a similar way to the computing-receiving units installed in vehicles. Moving along a road the user can key in its destination and at every intersection he follows routing instructions from the computer.

All of the aforementioned methods are based on a new industrial product, called PAN-DRIVE.

PAN-DRIVE can be produced in various versions, simpler with a degree of complexity, depending on the needs of the driver. The PAN-DRIVE system is always based on the transmission of encoded information from microemmitters, reception and processing by a system of decodercomputers of the system, amongst the numerous solutions that can be selected is as follows: An encoder with a MM 53200 integrated circuit of the National company which drives a self excited emmitter with the BFT99 transistor of 305 MHz resonance frequency. A one forth wavelength vertical whip antenna feeds a simple Supergenerative Receiver. Also based on an MM 53200 Integrated Circuit by National.

Any compatible Personal Computer is adequate for use as a Video Display Unit and processor.

**Claims**

1. Method of transmitting electronically encoded, uniquely defined charting of a traffic system or other specific point on the Earth's surface based on portable and/or permanent transmitter-encoders at the said locations, the transmissions from which transmitter encoders are received by compatible portable and/or stationary decoding receivers installed at fixed terrestial locations and/or in land, river or marine vehicles.

2. Method of providing optimised routing and road information to all pedestrians and drivers of vehicles for their transit between preselected departure and destination points based on emitters of specific range installed at and/or between appropriate road and/or highway intersections, and said emitters emitting omnidirectional and/or unidirection encoded ultrasonic and/or electromagnetic radiation of infrared and/or high radio frequency, the said signals constituting the means of identifying each of them by means of receiver decoder units installed in each vehicle and/or of each portable receiver decoder unit and their comparison with preprogrammed data to produce guidance instructions and define the routing of each vehicle to its preselected destination in terms of voice-simulated and/or recorded audio instructions and/or warnings of obstacles and/or and/or warnings of obstacles and/or screen display instructions in the form of text and/or diagrams and/or symbols with provision for re-optimisation of routing after intentional and/or accidental deviations and display of predicted arrival time.

3. A method of locating, reading and informing the driver of a vehicle and/or a pedestrian of the content of road signs and traffic lights by voice recorded and/or simulated audio means and/or by video display, by means of emitters continuously transmitting characteristic encoded identification signals installed on and/or near the said traffic lights and/or roadsigns and a decoder-receiver unit installed in the vehicle and/or carried by a person and/or persons on foot, the said emitter transmitting unidirectionally towards oncoming traffic and the said receiver decoder units provided with memory storage to record content and position of each and any traffic light and/or roadsign.